# FASCICULE DE BREVET EUROPEEN

(11) **EP 1 472 315 B1**
(45) Date de publication et mention de la délivrance du brevet: **14.03.2007**
(21) Numéro de dépôt: 03717346.5
(22) Date de dépôt: 22.01.2003
(51) Int. Cl.: C08L 53/00

(54) **FILM FIN A BASE D'ELASTOMERE THERMOPLASTIQUE, SON PROCEDE DE PREPARATION ET SES UTILISATIONS**
DÜNNFILM AUS THERMOPLASTISCHEM ELASTOMER, VERFAHREN ZUR DESSEN HERSTELLUNG UND SEINE ANWENDUNGEN
THERMOPLASTIC ELASTOMER THIN-WALLED FILM, METHOD FOR PREPARING SAME AND USES THEREOF

(30) Priorité: 08.02.2002 FR 0201548
(43) Date de publication de la demande: 03.11.2004
(73) Titulaire: HUTCHINSON, 75008 Paris (FR)
(72) Inventeur: HOERNER, Pierre, 60140 Liancourt (FR); SIRDEY, Thierry, F-75019 Paris (FR)
(74) Mandataire: Goulard, Sophie
(86) Numéro de dépôt international: PCT/FR2003/000202
(87) Numéro de publication internationale: WO 2003/066729

(56) Documents cités:
- EP-A- 0 254 346
- EP-A- 0 884 359
- WO-A-01/83609
- US-A- 6 050 871
- US-A- 6 161 555

## Description

La présente invention est relative à un film fin à base d'élastomère thermoplastique, à son procédé de préparation, ainsi qu'à son utilisation pour la fabrication d'articles élastomères fins tels que gants, doigtiers ou préservatifs.

Le latex naturel a longtemps été utilisé pour la fabrication d'articles fins (gants, doigtiers, préservatifs) par procédé de trempe. Le film est formé par évaporation de l'eau contenue dans la couche de latex déposée sur une forme, et coagulation des particules de caoutchouc. Il est ensuite vulcanisé (réticulation chimique) afin d'augmenter ses propriétés mécaniques.

Grâce à ses très bonnes propriétés mécaniques, même en film fin, et à son prix attractif, le latex naturel est le matériau de référence pour ces applications.

Cependant le latex naturel présente au moins trois inconvénients majeurs :
- la présence de microperforations dans les films ;
- les problèmes d'allergies et de sensibilité provoqués par le matériau ;
- la sensibilité à l'oxydation et au vieillissement.

Les trous sont dus principalement à des impuretés contenues dans les dispersions de latex, à la présence de microbulles lors de la fabrication, et/ou sont occasionnés en cours d'utilisation dudit article.

Les problèmes d'allergie sont inhérents à la présence de protéines allergisantes contenues dans le sérum de latex naturel, ainsi qu'à la présence de différents agents entrant dans la formulation du latex, tels que coagulants, accélérateurs et autres antioxydants.

Certains élastomères de synthèse, et tout particulièrement les élastomères thermoplastiques sont utilisés dans le but de remédier aux inconvénients engendrés par l'emploi de latex naturel.

Leur mise en oeuvre est cependant plus complexe et implique la dissolution des élastomères en milieu solvant. La solution d'élastomère en milieu solvant est déposée sur une forme lors de la trempe, le film d'élastomère se formant alors dans un deuxième temps lors de l'évaporation du solvant.

La mise au point d'une formulation d'élastomère thermoplastique pour la fabrication d'articles souples et fins, tels que des gants ou des préservatifs, selon un procédé de trempe doit en outre tenir compte des critères technologiques suivants :
- de la nature chimique des composés non volatils tels que élastomère(s), agents plastifiants et autres composés de mise en oeuvre) ; en particulier, il est important de tenir compte de leur compatibilité avec les réglementations applicables aux applications envisagées (applications médicales dans le cas de dispositifs médicaux notamment) ;
- de la nature des composés volatiles utilisés (solvants) pour la dissolution des composés non volatils : en particulier, il est important de tenir compte de leur toxicité vis-à-vis du manipulateur et de l'environnement ;
- des caractéristiques de dissolution des composés non volatiles dans les solvants utilisés (extrait sec, viscosité), l'objectif économique étant d'avoir le moins possible de solvant à évaporer ;
- de la qualité du film formé après évaporation du solvant et tout particulièrement : l'aspect du film qui doit présenter une très bonne homogénéité ("tendu du filin") ainsi que les propriétés mécaniques du matériau, essentiellement souplesse et résistance à la rupture.

C'est ainsi qu'il a par exemple déjà été proposé, notamment dans la demande internationale WO 95/00586 de réaliser des articles fins, tels que des gants ou des préservatifs, selon un procédé de trempe à partir d'une solution d'un mélange majoritaire d'un copolymère de styrène-butylène-styrène (S-B-S) et d'un copolymère de styrène-isoprène-styrène (S-I-S) dans un solvant inerte aliphatique en présence d'un agent plastifiant. Les articles obtenus en mettant en oeuvre de tels copolymères ne donnent pas entière satisfaction dans la mesure où ils restent très sensibles à l'oxydation, et de ce fait leurs propriétés initiales sont altérées au cours du vieillissement.

Il a par ailleurs déjà été proposé, notamment dans la demande de brevet EP 0 488 021 de réaliser des articles fins en élastomères par un procédé de trempe, à partir d'une solution d'au moins deux copolymères styrène-éthylène/butylène-styrène (S-EB-S) de viscosité différente et d'un agent plastifiant tel qu'une huile minérale, dans un solvant organique tel que le toluène. Bien que les articles obtenus en mettant en oeuvre de tels copolymères ne présentent pas l'inconvénient d'être sensibles à l'oxydation, leur fabrication nécessite l'emploi de solvants organiques aromatiques tels que le toluène, solvants tout particulièrement toxiques et dont l'emploi est bien évidemment à éviter d'un point de vue écologique.

Dans le cas particulier des matériaux élastomères fabriqués à partir de copolymères S-EB-S, les propriétés mécaniques dépendent directement de la nature de l'élastomère mis en oeuvre (masse molaire et teneur en styrène(PS)), ainsi que de la manière dont le film s'est formé (filmogénéité). Il est notamment admis par l'homme de l'art ("*Kraton Polymers for Adhesives and Sealants*", Shell Chemical Company, 1992, SC198-92 ; MORTON M. *et al.,* J. Poly. Scien., 1969, Part. C, 99-115 ; BEECHER J.F. *et al.,* J. Poly. Scien., 1969, Part. C, **26**, 117-134 ; KIM G. et al., Macromolecules, 1998, 31, 2569-2577 et LEDHE N.R. *et al.,* "*Thermoplastic Elastomers : A Comprehensive Review*", 1987, Hanser Publishers, Munich), que la balance entre les propriétés élastomériques, d'une part, et thermoplastiques d'autre part, provient de l'organisation de phase du matériau. De par l'incompatibilité entre les deux blocs EB et PS, le copolymère s'organise sous la forme de micro domaines de PS dispersés dans une matrice élastomérique EB. Les domaines de PS, "durs" à température ambiante, servent de noeuds physiques de réticulation et apportent élasticité et résistance mécanique au film ainsi formé. Ces caractéristiques sont fonction de la manière dont ces micro domaines sont organisés, le cas le plus favorable correspondant à une séparation optimale entre les deux phases.

Les copolymères S-EB-S commercialement disponibles et tels que ceux utilisés dans la demande de brevet EP 0 488 021 contiennent pour la plupart des teneurs en PS comprises entre 25 et 30 % en poids par rapport au poids total du S-EB-S. Les caractéristiques de dissolution et du film formé dépendent de la masse molaire du S-EB-S utilisé. Ces caractéristiques figurent dans le Tableau I ci-après :

**TABLEAU I**

| **Masse molaire du S-EB-S (en g/mol)** | **Viscosité de la dissolution (solvant aromatique)** | **Filmogénéité** | **Propriétés mécaniques du film plastifié** |
|---|---|---|---|
| **< 75 000** | faible | bonne | mauvaises |
| **> 75 000** | élevée | mauvaise | bonnes |

Il ressort de ce tableau que seule l'utilisation de S-EB-S ayant une masse molaire élevée (typiquement > 75 000 g/mol) permet d'obtenir des films plastifiés présentant des propriétés mécaniques satisfaisantes, mais de tels élastomères se mettent assez mal en solution et ne filmifient pas correctement.

C'est pourquoi, les formulations d'élastomères décrites dans la demande de brevet EP 0 488 021 se composent d'un mélange d'au moins deux S-EB-S (au moins un S-EB-S de masse molaire élevée dont la filmogénéité est facilitée par la présence d'au moins un S-EB-S de masse molaire faible), d'un plastifiant, et d'un solvant aromatique qui est le préférence le toluène.

Comme nous l'avons vu précédemment, dans un contexte général où la protection des individus et de l'environnement occupe une part grandissante dans la conception de nouvelles formulations, il est de toute première importance d'éviter au maximum l'emploi de solvants aromatiques tels que le toluène et de favoriser, au contraire, l'emploi de solvants cycloaliphatiques.

Cependant, les solvants cycloaliphatiques ayant un pouvoir solvant nettement inférieur à celui des solvants aromatiques, l'effet de la masse molaire du S-EB-S sur la viscosité de là dissolution est encore exacerbé. Dans ces conditions, la viscosité des solutions obtenues à partir de S-EB-S de masse molaire élevée devient incompatible avec celle requise pour la fabrication d'un film par le procédé de trempe.

C'est donc afin de remédier à ces problèmes majeurs que la Demanderesse a mis au point ce qui fait l'objet l'invention. Elle s'est notamment donnée pour but de pourvoir à un matériau thermoplastique présentant toutes les qualités requises en terme de filmogénéité et de propriétés mécaniques, pouvant être fabriqué par un procédé de trempe à partir d'une dissolution d'un copolymère S-EB-S dans un solvant cycloaliphatique ou majoritairement cycloaliphatique.

La présente invention a donc pour premier objet un film à base d'élastomère thermoplastique caractérisé par le fait qu'il comprend :
- un seul copolymère à blocs styrène-éthylène/butylène-styrène présentant une masse molaire supérieure ou égale à 75 000 g/mol,
- au moins un agent structurant choisi parmi les copolymères à blocs styrène-éthylène/propylène-styrène-éthylène/propylène (S-EP-S-EP), et
- au moins un agent plastifiant.

Le film élastomère thermoplastique conforme à l'Invention présente l'avantage de pouvoir être obtenu par un procédé de trempe mettant en oeuvre un solvant cycloaliphatique ou majoritairement cycloaliphatique ce qui permet de diminuer les risques de toxicité encourus par la manipulation de solvants aromatiques en grandes quantités. D'autre part, la présence de l'agent structurant tel que défini ci-dessus permet, ainsi que cela est démontré dans les exemples illustratifs ci-après, d'obtenir un gain d'extrait sec (solutions de départ d'élastomères plus concentrées) et ce sans entraîner une augmentation de la viscosité des dites solutions de départ. Les solutions de S-EP-S-EP seul en solvant cycloaliphatique sont en effet très peu visqueuses ; par conséquent, l'ajout de cet agent structurant à la solution d'élastomère à blocs S-EB-S tel que défini ci-dessus permet, par effet de dilution, d'abaisser la viscosité de la solution résultante et par là même, la fabrication de films élastomères thermoplastiques par un procédé de trempe.

De plus, de part sa structure à quatre blocs, ledit agent structurant S-EP-S-EP permet d'améliorer la filmogénéité de l'élastomère à blocs S-EB-S. Son effet très bénéfique est détectable dès l'étape de formation du film, au cours de laquelle il augmente la mobilité moléculaire des blocs EB et PS du S-EB-S et favorise ainsi leur organisation à l'état solide.

Il présente, au final, d'excellentes propriétés mécaniques en particulier un très bon "tendu du film" et une bonne résistance à la rupture.

Selon la présente Invention, on entend par solvant majoritairement cycloaliphatique, un solvant cycloaliphatique contenant au plus 25 % en poids de solvant aromatique.

De préférence, cette teneur en solvant aromatique est inférieure ou égale à 10 % en poids.

Les copolymères à blocs S-EB-S pouvant être utilisés pour la fabrication du film élastomère thermoplastique conforme à l'Invention contiennent de préférence de 29 à 33 % en poids de styrène par rapport au poids total du copolymère.

Selon l'Invention, de tels copolymères à blocs S-EB-S présentent de préférence une masse molaire comprise entre 75 000 et 300 000 g/mol.

Ils présentent en outre de préférence une viscosité en solution à 10 % en poids de copolymère dans le toluène à 25°C d'au moins 400 mPa.s, et encore plus particulièrement comprise entre 250 et 2500 mPa.s. Cette viscosité est mesurée à l'aide d'un viscosimètre rotatif à vitesse imposée de type BROOKFIELD® LVT muni d'une aiguille L3.

Dans la suite de la description et sauf indication contraire, toute référence à une valeur de viscosité devra être comprise comme ayant été mesurée comme indiqué ci-dessus.

De tels copolymères S-EB-S sont par exemples vendus sous les dénominations commerciales Kraton® G1654ES, Kraton® G1650ES et Kraton® G1651 ES par la société Kraton Polymers.

Selon l'Invention, les copolymères à blocs S-EP-S-EP sont de préférence choisis parmi les composés présentant une masse molaire inférieure ou égale à 200 000 g/mol, et encore plus particulièrement comprise entre 50 000 et 100 000 g/mol.

Selon une forme de réalisation avantageuse de l'Invention, les S-EP-S-EP sont choisis parmi les composés contenant au maximum 25 % en poids de styrène par rapport au poids total du copolymère à blocs S-EP-S-EP.

Ils présentent en outre de préférence une viscosité, en solution à 25 % en poids de copolymère dans le toluène à 25°C, d'au moins 1800 mPa.s, et encore plus particulièrement comprise entre 250 et 2 500 mPa.s.

Parmi ces S-EP-S-EP, on peut notamment citer à titre d'exemple, le copolymère vendu sous la dénomination Kraton® G1730 par la société Kraton Polymers.

Selon une forme particulièrement avantageuse de l'Invention, ledit agent structurant représente de 5 à 50 parts en poids pour 100 parts en poids de S-EB-S.

L'agent plastifiant est de préférence choisi parmi les huiles minérales parmi lesquelles on peut notamment citer les huiles minérales telles que les huiles paraffiniques commercialisées sous les dénominations Primol® 352 et Marcol® 82 par la société ESSO.

Selon une forme particulièrement avantageuse de l'Invention, ledit agent plastifiant représente de 25 à 150 parts en poids pour 100 parts en poids de S-EB-S.

Le film élastomère thermoplastique conforme à l'Invention peut se présenter sous la forme d'un matériau mono couche ou multicouches, et peut en outre renfermer une ou plusieurs substances chimiques actives telles qu'un agent antiseptique et/ou virucide.

De telles substances chimiques actives peuvent notamment être choisies parmi les ammoniums quaternaires, en particulier le diméthyldidécylammonium et le chlorure de benzalkonium ; les copolymères blocs à activité biocide tels que le copolymère bloc polydiméthylsiloxane-polyoxyéthylène ; les biguanides tels que les sels hydrosolubles de la chlorhexidine comme le digluconate de chlorhexidine ; le phtaraldéhyde ; les dérivés phénoliques tels que l'hexachlorophène ; les tensioactifs non ioniques comportant une séquence polyoxyéthylène tel que l'octoxynol (ou Triton® X100) ; l'hexamédine et leurs mélanges.

Lorsqu'elles sont utilisées, la ou les substances chimiques actives représentent de préférence de 5 à 25 % en poids par rapport au poids total dudit film élastomère.

Selon l'Invention, le film élastomère présente de préférence une épaisseur comprise entre 200 µm et 800 µm.

Le film élastomère thermoplastique conforme à l'invention peut notamment se présenter sous la forme de gants, doigtiers, préservatifs, etc.....

La présente invention a donc également pour objet l'utilisation d'au moins un film thermoplastique tel que défini ci-dessus pour la fabrication d'articles élastomères fins tels que gants, doigtiers ou préservatifs.

La présente invention a aussi pour objet un procédé de préparation dudit film d'élastomère thermoplastique, caractérisé en ce qu'il comprend :
(a) la préparation d'une solution liquide (A) par dissolution d'un seul copolymère à blocs styrène-éthylène/butylène-styrène présentant une masse molaire supérieure ou égale à 75 000 g/mol, d'au moins un agent structurant choisi parmi les copolymères à blocs styrène-éthylène/propylène-styrène-éthylène/propylène, et d'au moins un agent plastifiant, dans un solvant cycloaliphatique ou majoritairement cycloaliphatique ; et
(b) l'évaporation dudit solvant, pour obtenir un film élastomère thermoplastique.

De manière avantageuse, le procédé de préparation conforme à l'invention comporte, à l'issue de l'étape (a) et avant l'étape (b), une étape intermédiaire (c) consistant à tremper une forme, de préférence en porcelaine et préalablement chauffée à une température comprise entre 25 et 50°C, dans la solution liquide (A), de façon à aboutir, après évaporation du solvant lors de l'étape (b), à un film élastomère thermoplastique ayant la forme finale de l'article attendu par exemple un gant, un doigtier ou à un préservatif.

Les étapes (a) à (b), comprenant éventuellement l'étape (c) sont, bien entendu, répétées autant de fois que nécessaire lorsque l'on désire fabriquer un film multicouches.

À l'issue de l'étape (b), le film élastomère thermoplastique est de préférence séché à une température comprise entre 30 et 80°C pendant une durée comprise entre 15 et 300 minutes.

Le solvant cycloaliphatique est de préférence choisi parmi le cyclohexane, le méthylcyclohexane, l'éthylcyclohexane et leurs mélanges.

Le solvant majoritairement cycloaliphatique utilisé lors de l'étape (a), est un mélange d'au moins un solvant cycloaliphatique et d'au moins un solvant aromatique dans lequel le solvant aromatique représente au plus 25 % en poids et encore plus particulièrement au plus 10 % en poids par rapport à la quantité totale de solvant utilisée.

Parmi les solvants majoritairement cycloaliphatiques, on peut notamment citer les mélanges méthylcyclohexane/toluène en proportions massiques 9:1, ainsi que le mélange méthylcyclohexane/xylène dans les mêmes proportions massiques.

La nature des copolymères blocs S-EB-S, de l'agent structurant S-EP-S-EP, et de l'agent plastifiant, ainsi que leurs proportions respectives sont de préférence telles que définies précédemment.

La présente invention a également pour objet la solution liquide (A) mise en oeuvre au cours du procédé de fabrication et telle que définie ci-dessus.

Enfin, l'Invention a pour objet le film élastomère thermoplastique ainsi que l'article élastomère thermoplastique mis en forme, susceptibles d'être obtenus en mettant en oeuvre ledit procédé de préparation.

Outre les dispositions qui précèdent, l'invention comprend encore d'autres dispositions qui ressortiront de la description qui va suivre, qui se réfère à un exemple comparatif des caractéristiques viscosimétriques de dissolutions à base d'un ou de deux élastomères thermoplastiques en solvant majoritairement cycloaliphatique, à un exemple comparatif de réalisation de gants en élastomères thermoplastiques à partir de solutions liquides contenant un ou deux élastomères thermoplastiques, à un exemple comparatif de caractérisation des propriétés mécaniques des films thermoplastiques obtenus à partir de solutions liquides contenant un ou deux élastomères thermoplastiques, ainsi qu'aux figures annexées dans lesquelles :
- la figure 1 représente la viscosité mesurée en fonction de l'extrait sec des dissolutions préparées à l'exemple 1 ;
- la figure 2 représente le thermogramme résultant de l'analyse thermodynamique mécanique (Dynamic Mechanical Thermal Analysis : DMTA) des trois films élastomères réalisés à l'exemple 2 ; et
- la figure 3 représente le thermogramme résultant de l'analyse DMTA des deux films élastomères réalisés à l'exemple 3.

### EXEMPLE 1 : Comparaison des caractéristiques viscosimétriques de dissolutions à base d'un ou deux copolymères S-EB-S dans un solvant majoritairement cycloaliphatique

Le but de cet exemple est de mesurer les caractéristiques viscosimétriques de solutions liquides d'élastomères thermoplastiques obtenues lors de la dissolution, dans un solvant majoritairement cycloaliphatique, d'un seul copolymère à blocs S-EB-S associé à un agent plastifiant et éventuellement à un agent structurant S-EP-S-EP, comparativement celles obtenues par dissolution de deux copolymères à blocs S-EB-S associés au même agent plastifiant mais sans agent structurant.

### 1) Matériel et produits utilisés

◆ Élastomères à blocs S-EB-S :
   - **S-EB-S A :** produit de masse molaire supérieure à 75 000 g/mol, contenant 31 % en poids de styrène, vendu sous la dénomination commerciale Kraton® G1654ES par la société Kraton Polymers,
   - **S-EB-S B :** produit de masse molaire supérieure à 75 000 g/mol, contenant 30 % en poids de styrène, vendu sous la dénomination commerciale Kraton® G1650ES par la société Kraton Polymers,
   - **S-EB-S C :** produit de masse molaire supérieure à 75 000 g/mol, contenant 33 % en poids de styrène, vendu sous la dénomination commerciale Kraton® G1651ES par la société Kraton Polymers,
◆ Agent structurant : copolymère à blocs S-EP-S-EP, présentant une masse molaire d'environ 70 000 g/mol, et contenant 21 % en poids de styrène, vendu sous la dénomination commerciale Kraton® G1730 par la société Kraton Polymers.
◆ Agent plastifiant : huile paraffinique vendue sous la dénomination commerciale Primol® 352 par la société Esso.
◆ Solvant majoritairement cycloaliphatique : mélange méthyleyclohexane/toluène en proportions massiques 9:1.
◆ Mesure des viscosités : dans cet exemple, toutes les viscosités sont mesurées à une température de 20 °C, à l'aide d'un rhéomètre HAAKE® VT550, muni d'une géométrie de type COUETTE à double entrefer NV, et à un cisaillement de 100s⁻¹.

### 2) Préparation des dissolutions d'élastomères

Les dissolutions 1 à 3 sont préparées par pesée des différents constituants, qui sont ensuite introduits, sous agitation, dans un récipient adapté contenant la quantité de solvant souhaitée, selon les proportions figurant dans le Tableau II ci-dessous :

**TABLEAU II**

| | **Dissolution n°1 (*)** | **Dissolution n°2** | **Dissolution n°3 (*)** |
|---|---|---|---|
| **S-EB-S A (en g)** | 100 | 100 | - |
| **S-EB-S B (en g)** | - | - | 50 |
| **S-EB-S C (en g)** | - | - | 50 |
| **Agent structurant (en g)** | - | 25 | - |
| **Agent plastifiant (en g)** | 62,5 | 70 | 62,5 |
| **% d'agent plastifiant par rapport au poids total des polymères** | 62,5 | 62,5 | 62,5 |

| | | | |
|---|---|---|---|
| (*) Dissolutions ne faisant pas partie de l'Invention : les dissolutions n° 1 ne contiennent pas d'agent structurant et d'autre part, la dissolution n°3 contient deux élastomères à blocs S-EB-S comme décrit par exemple dans la demande de brevet EP 0 488 021 | | | |

Il est important de remarquer que chacune de ces dissolutions contient la même quantité relative d'agent plastifiant, celle-ci étant exprimée par rapport à la somme massique des composés élastomères (S-EB-S et S-EP-S-EP).

L'extrait sec de chacune des dissolutions est compris entre 13 et 18 %.

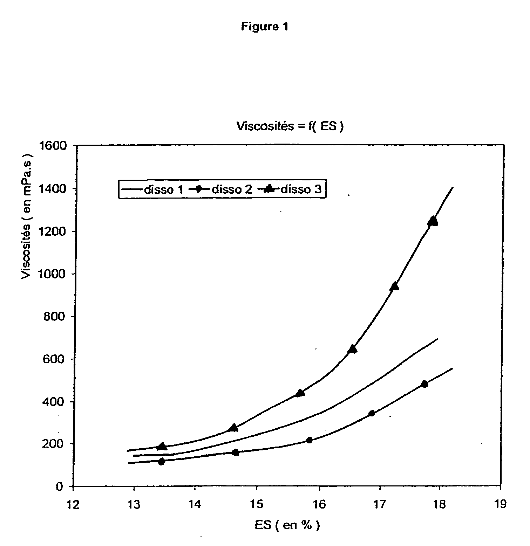

Les courbes de viscosités mesurées en fonction de la teneur en extrait sec sont représentées sur la figure 1 sur laquelle la courbe représentée par un trait continu correspond à la viscosité de la dissolution n°1, la courbe représentée par un trait interrompu par des ronds pleins correspond à la viscosité de la dissolution n°2 et la courbe représentée par un trait interrompu par des triangles pleins correspond à la viscosité de la dissolution n°3.

Ces résultats montrent que la dissolution n°2 conforme à l'invention car ne contenant qu'un seul copolymère à blocs S-EB-S en association avec un agent structurant choisi parmi les copolymères à blocs S-EP-S-EP, présente, à une teneur en extrait sec équivalente, une viscosité sensiblement plus faible que les dissolutions n°1 et n°3 ne faisant pas partie de l'Invention.

Aussi, lorsque l'on se place cette fois à viscosité équivalente, il est possible de mettre en oeuvre une dissolution conforme à l'Invention présentant une teneur en extrait sec plus élevée, permettant de diminuer ainsi la quantité de solvant à utiliser, et par-là même les coûts ainsi que les risques toxicologiques et environnementaux liés à l'emploi de tels solvants.

### EXEMPLE 2 : Etude comparative des propriétés mécaniques de films fins en élastomères thermoplastiques préparés à partir de solutions liquides contenant un ou deux copolymères à blocs S-EB-S selon un procédé de trempe

### 1) Matériel et méthode

Dans cet exemple, les dissolutions n°2 et n°3 présentant un extrait sec de 15 %, et telles que préparées ci-dessus à l'exemple 1 ont été utilisées.

Une dissolution comparative n°4 ne faisant pas partie de l'Invention et ayant la composition indiquée ci-dessous a également été préparée selon le même protocole de préparation que celui décrit ci-dessus à l'exemple 1.

### Dissolution n°4

- S-EB-S A 100 g
- Mélange méthylcyclohexane/toluène (9:1) 900 g
- Extrait sec 10 %

A partir de chacune des dissolutions n°2, 3 et 4, des films fins correspondants (film 2; film 3 et film 4) sont réalisés selon un procédé de trempe.

Pour ce faire, une forme en biscuit de porcelaine, préalablement chauffée à une température de 45°C est trempée dans la dissolution d'élastomères. L'opération s'effectue dans une pièce climatisée à 20°C. La forme est maintenue immergée dans la dissolution pendant environ 10 secondes puis retirée lentement. Elle est ensuite immédiatement mise en rotation pendant environ 3 minutes, afin de permettre une bonne répartition de la couche de dissolution entraînée sur la forme. La forme est ensuite mise à sécher, pendant 18 minutes, dans une étuve dont la température est maintenue à 45°C. L'opération de trempe est alors répétée trois fois, de façon à obtenir un film élastomère thermoplastique constitué de quatre couches successives et présentant une épaisseur finale d'environ 200 µm.

### 2) Caractérisation des films obtenus

- Film 4 obtenu à partir de la dissolution n°4 :
   Dès le surcouchage de la première couche on note l'apparition d'amorces de ruptures en forme d'étoiles qui s'amplifient lors de la superposition des couches suivantes. Ces amorces de ruptures résultent de l'apparition de tensions lors du séchage du film dont la raideur ne permet pas la dissipation. Ce film 4, ne contenant qu'un seul copolymère à blocs S-EB-S, mais pas d'agent structurant à blocs S-EP-S-EP, et donc ne faisant pas partie de l'Invention, n'est pas exploitable.
- Film 3 obtenu à partir de la dissolution n°3 :
   Aucune craquelure n'est détectée sur le film en cours de trempe, ni après les séchages successifs. Cependant, le film obtenu présente quelques marbrures et hétérogénéités macroscopiques pouvant résulter d'une mauvaise organisation des élastomères lors de l'étape d'évaporation du solvant. Ce film, obtenu à partir d'une dissolution contenant l'association de deux copolymères à blocs S-EB-S ne faisant pas partie de l'Invention, n'est pas exploitable non plus.
- Film 2 obtenu à partir de la dissolution n°2 :
   Ce film conforme à l'invention, c'est-à-dire contenant l'association d'un seul copolymère à blocs S-EB-S et d'un agent structurant S-EP-S-EP, présente un aspect très correct, sans craquelure ni marbrure. Le "tendu du film" est par ailleurs très bon.

Les films sont ensuite caractérisés par analyse thermodynamique mécanique (DMTA). La DMTA consiste à soumettre un échantillon à des sollicitations de déformations dans des conditions précises de température et de fréquence, à obtenir et à traiter ensuite l'ensemble des grandeurs rhéologiques caractérisant le matériau telles que la valeur de la tangente δ (tanδ).

Tanδ est définie comme étant le rapport des grandeurs E'/E".

E' se définit comme étant le module de conservation, caractérisant l'énergie accumulée dans l'échantillon sous forme élastique, donc récupérable.

E" est le module de perte ; il caractérise l'énergie dissipée dans le matériau lors de frottements entre les macromolécules le constituant et résultant de la viscosité du milieu.

La DMTA a été réalisée dans les conditions suivantes :
- Rampe thermique allant de -150 à + 125°C, à raison de 2°C par minute,
- Fréquence : 1Hz

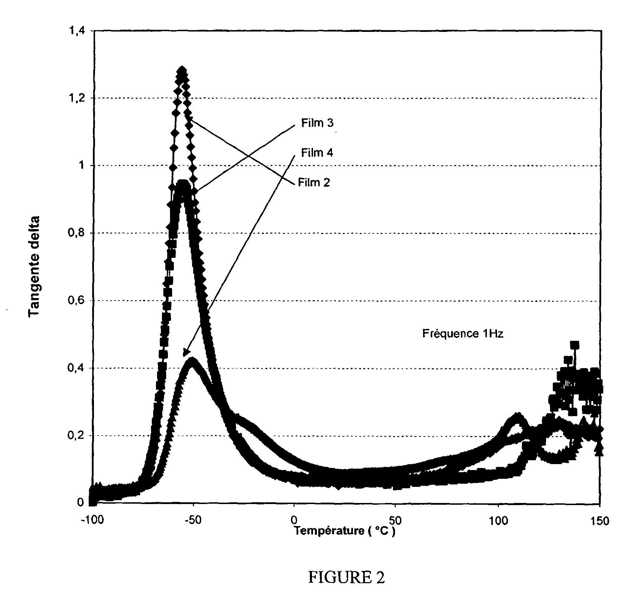

Les résultats obtenus apparaissent sur la figure 2.
Ces résultats montrent :
- en ce qui concerne le film non plastifié obtenu à partir de la dissolution n°4 : la largeur du pic relatif à la transmission EB, ainsi que la valeur de la tangente δ (tanδ) sur le plateau caoutchoutique sont significatifs d'une absence de séparation de phase nette entre les domaines PS et la phase continue EB (séparation de phase élastomère/polystyrène) ;
- en ce qui concerne le film plastifié obtenu à partir de la dissolution n°3 : on constate que la séparation de phase élastomère/polystyrène est meilleure ;
- en ce qui concerne le film plastifié conforme à l'Invention, obtenu à partir de la dissolution n°2 : on constate que la séparation de phase élastomère/polystyrène est très bonne. De surcroît, la valeur de tanδ à la transition de phase élastomérique est très élevée, ce qui traduit une bonne mobilité moléculaire (dissipation visqueuse importante). Le rôle de l'agent structurant à blocs S-EP-S-EP sur la mobilité des chaînes, et par conséquent sur la filmogénéité du matériau, est ainsi mis en évidence.

### EXEMPLE 3 : Propriétés mécaniques d'un film élastomère préparé à partir d'un seul copolymère à blocs S-EB-S et d'un agent structurant S-EP-S-EP, par rapport à celles d'un film élastomère préparé à partir d'un mélange de deux copolymères à blocs S-EB-S

Le but de cet exemple est de comparer les caractéristiques mécaniques d'un film élastomère obtenu à partir d'un mélange de deux copolymères à blocs S-EB-S (l'un de masse molaire supérieure à 75 000 g/mol, l'autre de masse molaire inférieure à 75 000 g/mol) à celles d'un film élastomère obtenu à partir d'un seul copolymère à blocs S-EB-S de masse molaire supérieure à 75 000 g/mol associé à un agent structurant à blocs S-EP-S-EP.

A des fins de comparaison, les deux mélanges ne contiennent pas d'agent plastifiant.

### 1) Matériel et méthode

◆ Élastomères à blocs S-EB-S :
   - **S-EB-S A :** tel que défini ci-dessus à l'exemple 1, de masse molaire supérieure à 75 000 g/mol,
   - **S-EB-S D :** produit de masse molaire inférieure à 75 000 g/mol, contenant 30 % en poids de styrène, vendu sous la dénomination commerciale Kraton® G1652 par la société Kraton Polymers.
◆ Agent structurant : Kraton® G1730 tel que défini ci-dessus à l'exemple 1.
◆ Solvant majoritairement cycloaliphatique : mélange méthylcyclohexane/toluène en proportions massiques 9:1.

### 2) Préparation des dissolutions d'élastomères

Les dissolutions 5 et 6 ont été préparées comme décrit ci-dessus à l'exemple 1, selon les proportions figurant dans le Tableau III ci-après :

**TABLEAU III**

| | **Dissolution n°5 (*)** | **Dissolution n°6** |
|---|---|---|
| S-EB-S A (en g) | 100 | 100 |
| S-EB-S D (en g) | 25 | - |
| Agent structurant (en g) | - | 25 |
| Extrait sec (%) | 10 | 10 |

| | | |
|---|---|---|
| (*) Dissolution ne faisant pas partie de l'Invention car contient un mélange de deux copolymères à blocs S-EB-S. | | |

### 3) Préparation des films et caractérisations

Les dissolutions n°5 et n°6 ont été utilisées pour la fabrication des films 5 et 6 selon le procédé de trempe décrit ci-dessus à l'exemple 2.

Lors du séchage, aucun défaut ni aucune anomalie ne sont détectée sur le film 6 conforme à l'Invention.

En revanche, le tendu du film 5 ne faisant pas partie de la présente Invention est moins bon que celui du film 6.

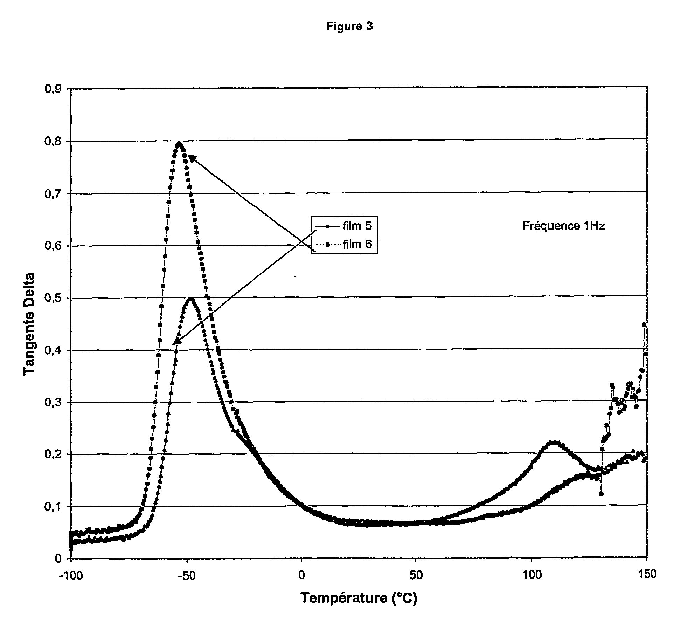

Les thermogrammes DMTA, réalisés dans les conditions décrites ci-dessus sont représentés sur la figure 3.

Les courbes reportées sur cette figure montrent une importante différence de morphologie entre les deux films. De manière claire, le film 6 conforme à l'Invention présente, à la température de transition de phase élastomérique (entre environ -80°C et -25°C), une plus grande amplitude de tanδ, traduisant une plus grande mobilité des chaînes.

## Revendications

1. Film à base d'élastomère thermoplastique **caractérisé par le fait qu'**il comprend :
- un seul copolymère à blocs styrène-éthylène/butylène-styrène (S-EB-S) présentant une masse molaire supérieure ou égale à 75 000 g/mol,
- au moins un agent structurant choisi parmi les copolymères à blocs styrène-éthylène/propylène-styrène-éthylène/propylène (S-EP-S-EP), et
- au moins un agent plastifiant.

2. Film selon la revendication 1, **caractérisé par le fait que** le copolymère à blocs S-EB-S contient de 29 à 33 % en poids de styrène par rapport au poids total dudit copolymère.

3. Film selon la revendication 1 ou 2, **caractérisé par le fait que** le copolymère à blocs S-EB-S présente une masse molaire comprise entre 75 000 et 300 000 g/mol.

4. Film selon l'une quelconque des revendications précédentes, **caractérisé par le fait que** les copolymères à blocs S-EP-S-EP sont choisis parmi les composés présentant une masse molaire inférieure ou égale à 200 000 g/mol.

5. Film selon l'une quelconque des revendications précédentes, **caractérisé par le fait que** les copolymères à blocs S-EP-S-EP sont choisis parmi les composés contenant au maximum 25 % en poids de styrène par rapport au poids total du copolymère à blocs S-EP-S-EP.

6. Film selon l'une quelconque des revendications précédentes, **caractérisé par le fait que** l'agent structurant représente de 5 à 50 parts en poids pour 100 parts en poids de S-EB-S.

7. Film selon l'une quelconque des revendications précédentes, **caractérisé par le fait que** l'agent plastifiant est une huile minérale.

8. Film selon l'une quelconque des revendications précédentes, **caractérisé par le fait que** l'agent plastifiant représente de 25 à 150 parts en poids pour 100 parts en poids de S-EB-S.

9. Film selon l'une quelconque des revendications précédentes, **caractérisé par le fait qu'**il se présente sous la forme d'un matériau mono couche ou multicouches.

10. Film selon l'une quelconque des revendications précédentes, **caractérisé par le fait qu'**il renferme une ou plusieurs substances chimiques actives.

11. Film selon l'une quelconque des revendications précédentes, **caractérisé par le fait qu'**il se présente sous la forme de gant, de doigtier ou de préservatif.

12. Utilisation d'au moins un film thermoplastique tel que défini à l'une quelconque des revendications précédentes pour la fabrication d'articles élastomères fins.

13. Procédé de préparation d'un film thermoplastique tel que défini à l'une quelconque des revendications 1 à 11, **caractérisé en ce qu'**il comprend :
(a) la préparation d'une solution liquide (A) par dissolution d'un seul copolymère à blocs styrène-éthylène/butylène-styrène (S-EB-S) présentant une masse molaire supérieure ou égale à 75 000 g/mol, d'au moins un agent structurant choisi parmi les copolymères à blocs styrène-éthylène/propylène-styrène-éthylène/propylène (S-EP-S-EP), et d'au moins un agent plastifiant, dans un solvant cycloaliphatique ou majoritairement cycloaliphatique ; et
(b) l'évaporation dudit solvant, pour obtenir un film élastomère thermoplastique.

14. Procédé selon la revendication 13, **caractérisé par le fait qu'**il comporte, à l'issue de l'étape (a) et avant l'étape (b), une étape intermédiaire (c) consistant à tremper une forme préalablement chauffée à une température comprise entre 25 et 50 °C, dans la solution liquide (A).

15. Procédé selon la revendication 13 ou 14, **caractérisé par le fait que** le solvant cycloaliphatique est choisi parmi le cyclohexane, le méthylcyclohexane, l'éthylcyclohexane et leurs mélanges.

16. Procédé selon la revendication 13 ou 14, **caractérisé par le fait que** solvant majoritairement cycloaliphatique est un mélange d'au moins un solvant cycloaliphatique et d'au moins un solvant aromatique, dans lequel le solvant aromatique représente au plus 25 % en poids par rapport à la quantité totale de solvant utilisée.

17. Procédé selon la revendication 16, **caractérisé par le fait que** le solvant majoritairement cycloaliphatique est un mélange méthylcyclohexane/toluène ou un mélange méthylcyclohexane/xylène, en proportions massiques 9:1.

18. Solution liquide (A) telle que mise en oeuvre au cours de l'étape (a) du procédé de préparation défini à l'une quelconque des revendications 13 à 17.

19. Film élastomère thermoplastique **caractérisé par le fait qu'**il est susceptible d'être obtenu selon le procédé défini à l'une quelconque des revendications 13 et 15 à 17.

20. Article élastomère thermoplastique mis en forme, **caractérisé par le fait qu'**il est susceptible d'être obtenu selon le procédé défini à l'une quelconque des revendications 14 à 17.

## Claims

1. A thermoplastic-elastomer-based film, **characterized in that** it comprises:
- a single styrene/ethylene-butylene/styrene (S-EB-S) block copolymer having a molar mass greater than or equal to 75 000 g/mol;
- at least one structuring agent chosen from styrene/ethylene-propylene/styrene/ethylene-propylene (S-EP-S-EP) block copolymers; and
- at least one plasticizer.

2. The film as claimed in claim 1, **characterized in that** the S-EB-S block copolymer contains 29 to 33% by weight of styrene relative to the total weight of said copolymer.

3. The film as claimed in claim 1 or 2, **characterized in that** the S-EB-S block copolymer has a molar mass of between 75 000 and 300 000 g/mol.

4. The film as claimed in any one of the preceding claims, **characterized in that** the S-EP-S-EP block copolymers are chosen from compounds having a molar mass of less than or equal to 200 000 g/mol.

5. The film as claimed in any one of the preceding claims, **characterized in that** the S-EP-S-EP block copolymers are chosen from compounds containing at most 25% by weight of styrene relative to the total weight of the S-EP-S-EP block copolymer.

6. The film as claimed in any one of the preceding claims, **characterized in that** the structuring agent represents from 5 to 50 parts by weight per 100 parts by weight of S-EB-S.

7. The film as claimed in any one of the preceding claims, **characterized in that** the plasticizer is a mineral oil.

8. The film as claimed in any one of the preceding claims, **characterized in that** the plasticizer represents from 25 to 150 parts by weight per 100 parts by weight of S-EB-S.

9. The film as claimed in any one of the preceding claims, **characterized in that** it is in the form of a monolayer or multilayer material.

10. The film as claimed in any one of the preceding claims, **characterized in that** it contains one or more active chemical substances.

11. The film as claimed in any one of the preceding claims, **characterized in that** it is in the form of a glove, a fingerstall or a condom.

12. The use of at least one thermoplastic film as defined in any one of the preceding claims for the manufacture of thin-walled elastomer articles.

13. A method of preparing a thermoplastic film as defined in any one of claims 1 to 11, **characterized in that** it comprises:
(a) the preparation of a liquid solution (A) by dissolving a single styrene/ethylene-butylene/styrene (S-EB-S) block copolymer having a molar mass greater than or equal to 75 000 g/mol, of at least one structuring agent chosen from styrene/ethylene-propylene/styrene/ethylene-propylene (S-EP-S-EP) block copolymers and of at least one plasticizer in a cycloaliphatic or predominantly cycloaliphatic solvent; and
(b) the evaporation of said solvent in order to obtain a thermoplastic elastomer film.

14. The method as claimed in claim 13, **characterized in that** it includes, after step (a) and before step (b), an intermediate step (c) consisting in dipping a former preheated to a temperature between 25 and 50°C into the liquid solution (A).

15. The method as claimed in claims 13 or 14, **characterized in that** the cycloaliphatic solvent is chosen from cyclohexane, methylcyclohexane, ethylcyclohexane and mixtures thereof.

16. The method as claimed in claims 13 or 14, **characterized in that** the predominantly cycloaliphatic solvent is a mixture of at least one cycloaliphatic solvent and of at least one aromatic solvent, in which the aromatic solvent represents at most 25% by weight relative to the total amount of solvent used.

17. The method as claimed in claim 16, **characterized in that** the predominantly cycloaliphatic solvent is a methylcyclohexane/toluene mixture or a methylcyclohexane/xylene mixture, in proportions of 9/1 by weight.

18. A liquid solution (A) as used in step (a) of the method preparation defined in any one of claims 13 to 17.

19. A thermoplastic elastomer film, **characterized in that** it is able to be obtained using the method defined in any one of claims 13 and 15 to 17.

20. A shaped thermoplastic elastomer article, **characterized in that** it is able to be obtained using the method defined in any one of claims 14 to 17.

## Patentansprüche

1. Film auf thermoplastischer Elastomerbasis, **dadurch gekennzeichnet, dass** er umfasst:
- ein einziges Styrol-Ethylen/Butylen-Styrol (S-EB-S)-Blockcopolymer, das eine Molmasse von größer oder gleich 75000 g/mol aufweist,
- mindestens ein strukturgebendes Mittel, ausgewählt aus den Styrol-Ethylen/Propylen-Styrol-Ethylen/Propylen (S-EP-S-EP)-Blockcopolymeren und
- mindestens einen Weichmacher.

2. Film nach Anspruch 1, **dadurch gekennzeichnet, dass** das S-EB-S-Blockcopolymer 29 bis 33 Gew.-% Styrol, bezogen auf das Gesamtgewicht des Copolymers, enthält.

3. Film nach Anspruch 1 oder 2, **dadurch gekennzeichnet, dass** das S-EB-S-Blockcopolymer eine Molmasse von 75000 bis 300000 g/mol aufweist.

4. Film nach einem der vorhergehenden Ansprüche, **dadurch gekennzeichnet, dass** die S-EP-S-EP-Blockcopolymere aus den Verbindungen ausgewählt sind, die eine Molmasse von kleiner oder gleich 200000 g/mol aufweisen.

5. Film nach einem der vorhergehenden Ansprüche, **dadurch gekennzeichnet, dass** die S-EP-S-EP-Blockcopolymere aus den Verbindungen gewählt sind, die, bezogen auf das Gesamtgewicht des S-EP-S-EP-Blockcopolymers, maximal 25 Gew.-% Styrol enthalten.

6. Film nach einem der vorhergehenden Ansprüche, **dadurch gekennzeichnet, dass** das strukturgebende Mittel 5 bis 50 Gewichtsteile pro 100 Gewichtsteile S-EB-S ausmacht.

7. Film nach einem der vorhergehenden Ansprüche, **dadurch gekennzeichnet, dass** der Weichmacher ein Mineralöl ist.

8. Film nach einem der vorhergehenden Ansprüche, **dadurch gekennzeichnet, dass** der Weichmacher 25 bis 150 Gewichtsteile pro 100 Gewichtsteile S-EB-S darstellt.

9. Film nach einem der vorhergehenden Ansprüche, **dadurch gekennzeichnet, dass** er in Form eines einschichtigen oder mehrschichtigen Materials vorliegt.

10. Film nach einem der vorhergehenden Ansprüche, **dadurch gekennzeichnet, dass** er eine oder mehrere chemische aktive Substanzen einschließt.

11. Film nach einem der vorhergehenden Ansprüche, **dadurch gekennzeichnet, dass** er in Handschuh-, Fingerling- oder Präservativform vorliegt.

12. Verwendung von mindestens einem thermoplastischen Film, wie nach einem der vorhergehenden Ansprüche definiert, zur Herstellung von dünnen elastomeren Gegenständen.

13. Verfahren zur Herstellung eines thermoplastischen Films, wie nach einem der Ansprüche 1 bis 11 definiert, **dadurch gekennzeichnet, dass** es umfasst:
(a) die Herstellung einer flüssigen Lösung (A) durch Auflösung eines einzigen Styrol-Ethylen/Butylen-Styrol (S-EB-S)-Blockcopolymers, das eine Molmasse von größer oder gleich 75000 g/mol aufweist, mindestens eines strukturgebenden Mittels, ausgewählt aus den Styrol-Ethylen/Propylen-Styrol-Ethylen/Propylen (S-EP-S-EP)-Blockcopolymeren, und mindestens eines Weichmachers in einem cycloaliphatischen oder überwiegend cycloaliphatischen Lösungsmittel; und
(b) das Eindampfen des Lösungsmittels, um einen thermoplastischen Elastomerfilm zu erhalten.

14. Verfahren nach Anspruch 13, **dadurch gekennzeichnet, dass** es am Ende von Schritt (a) und vor Schritt (b) einen Zwischenschritt (c) einschließt, der darin besteht, eine zuvor auf eine Temperatur von 25 bis 50 °C erwärmte Form in der flüssigen Lösung (A) auszuhärten.

15. Verfahren nach Anspruch 13 oder 14, **dadurch gekennzeichnet, dass** das cycloaliphatische Lösungsmittel aus Cyclohexan, Methylcyclohexan, Ethylcyclohexan und ihren Gemischen ausgewählt ist.

16. Verfahren nach Anspruch 13 oder 14, **dadurch gekennzeichnet, dass** das überwiegend cycloaliphatische Lösungsmittel ein Gemisch von mindestens einem cycloaliphatischen und mindestens einem aromatischen Lösungsmittel ist, wobei das aromatische Lösungsmittel, bezogen auf die Gesamtmenge an verwendetem Lösungsmittel, höchstens 25 Gew.-% ausmacht.

17. Verfahren nach Anspruch 16, **dadurch gekennzeichnet, dass** das überwiegend cycloaliphatische Lösungsmittel ein Methylcyclohexan/Toluol- oder ein Methylcyclohexan/Xylol-Gemisch in den Masseanteilen 9:1 ist.

18. Flüssige Lösung (A), wie während Schritt (a) des Herstellungsverfahrens nach einem der Ansprüche 13 bis 17 eingesetzt.

19. Thermoplastischer Elastomerfilm, **dadurch gekennzeichnet, dass** er nach dem Verfahren nach einem der Ansprüche 13 und 15 bis 17 erhalten werden kann.

20. Thermoplastischer elastomerer geformter Gegenstand, **dadurch gekennzeichnet, dass** er nach dem Verfahren nach einem der Ansprüche 14 bis 17 erhalten werden kann.
